# EUROPÄISCHE PATENTANMELDUNG

(11) **EP 0 827 766 A1**
(43) Veröffentlichungstag der Anmeldung: **11.03.1998**
(21) Anmeldenummer: 97113291.5
(22) Anmeldetag: 01.08.1997
(51) Int. Cl.: B01D 25/12

(54) **Pressmembran für eine Membranplatte einer Plattenfilterpresse**

(30) Priorität: 07.09.1996 DE 19636436
(71) Anmelder: Eberhard Hoesch & Söhne GmbH Verfahrens- und Anlagentechnik, D-52477 Alsdorf (DE)
(72) Erfinder: Spölgen, Hermann-J., 52379 Langerwehe (DE)
(74) Vertreter: Bauer, Hubert, Dipl.-Ing.

(57) **Zusammenfassung**

Eine Preßmembran (2) für eine Membranplatte (1) einer Plattenfilterpresse besteht aus einem mit Noppen (3) versehenen Preßteil (4), das einem im wesentlichen parallel zu der Preßmembran (2) verlaufenden Filtertuch zugewandt und gegen dieses preßbar ist. Dazu ist die den Noppen (3) gegenüberliegende Seite der Preßmembran (2) mit einem Druckmittel beaufschlagbar. Die Preßmembran (2) besteht des weiteren aus einem umlaufenden Halterahmen (5), über den sie mit einem daran angeordneten, umlaufenden Randwulst (6) in eine angepaßte Ringnut (7) in der Membranplatte (1) preßbar ist. Um eine derartige Preßmembran (1) einfach und kostengünstig herstellen zu können und gleichzeitig auch hohe Anforderungen an die Abdichtfunktion zu erfüllen wird vorgeschlagen, daß das Preßteil (4) und der Halterahmen (5) einstückig hergestellt sind und aus demselben Material bestehen.

## Beschreibung

Die Erfindung betrifft eine Preßmembran für eine Membranplatte einer Plattenfilterpresse mit einem mit Noppen versehenen Preßteil, das einem im wesentlichen parallel zu der Preßmembran verlaufenden Filtertuch zugewandt und gegen dieses preßbar ist und dazu auf seiner den Noppen gegenüberliegenden Seite mit einem Druckmittel beaufschlagbar ist sowie mit einem umlaufenden Halterahmen, über den die Preßmembran beim Verriegeln der Plattenfilterpresse mit einem an den Halterahmen angeordneten umlaufenden Randwulst in eine daran angepaßte Ringnut in der Membranplatte preßbar ist.

Eine derartige Preßmembran ist beispielsweise aus der EP 0 556 186 B1 bekannt. Bei der darin beschriebenen Preßmembran besteht das mit Noppen versehene Preßteil beispielsweise aus einem Gummimaterial mit einer Shore-Härte von ca. 65, während der aufvulkanisierte Halterahmen aus einem härteren Gummimaterial hergestellt ist, das beispielsweise eine Shore-Härte von ca. 90 aufweist.

Aus der EP 0 556 186 B1 ist es ebenfalls bekannt, daß für das Preßteil einerseits und den umlaufenden Halterahmen andererseits jeweils ein Kunststoffmaterial verwendet wird, wobei wiederum das Material des Halterahmens eine größere Härte aufweist, als das Material des eigentlichen Preßteils. Auch in diesem Fall wird es als vorteilhaft beschrieben, die beiden Bauteile zu verbinden, wobei in diesem Fall aufgrund des Materials keine Vulkanisierung sondern lediglich ein Verschweißen der beiden Kunststoffe in Frage kommt.

Unabhängig von der Materialkombination befindet sich die Trennfläche zwischen dem Halterahmen und dem Preßteil im Bereich des umlaufenden Randwulstes, der für eine Abdichtung der Preßmembran sorgt, sofern über dem Halterahmen ein Druck auf den Randwulst ausgeübt wird.

Da sich der Randwulst jedoch auf einer der Filterkammer abgewandten Seite einer Auswölbung der Filterplatte befindet, muß die Trennfläche zwischen dem Halterahmen und dem Preßteil eine unregelmäßige Kontur aufweisen. Für die Herstellung dieser Rahmenkombination ist somit ein hoher Produktionsaufwand erforderlich, zumal der Trennfläche eine wesentliche Dichtungsfunktion zukommt. Aus den vorbeschriebenen Gründen ist die aus dem Stand der Technik bekannte Preßmembran somit kompliziert in ihrem Aufbau und teuer in der Herstellung.

Im einzelnen stellen sich die Nachteile der bekannten Preßmembran wie folgt dar:

Im Bereich des Membran-Außenrandes ist also ein Halbrundwulst ausgebildet. Oberhalb dieses Weichgummiwulstes ist ein umlaufender Gummirahmen auf die Membranplatte aufvulkanisiert. Der Hartgummirahmen dient vorrangig zur Aufnahme der Filtratablaufbohrungen, deren Querschnitt sich im zusammengepreßten Zustand nicht unzulässig verkleinern darf.

Die Gesamthöhe des Membranrandes, das heißt, des Weichgummiwulstes plus des Hartgummirahmens ist so dimensioniert, daß die Membran im eingebauten Zustand über die Außenkante des Plattengrundkörpers hinausragt. Dabei handelt es sich um den Vorspannweg. Die Befestigung der Membran auf dem Grundkörper erfolgt durch die Verklammerung mit einer am Außenrand eingesetzten umlaufenden Gummi-Profilschnur.

Beim Zusammenpressen des Plattenpakets durch die Pressenschließkraft verformt sich vorrangig der im Plattengrundkörper eingebettete Weichgummi-Halbrundwulst um den Vorspannweg, das heißt, um den Überstand der Membran über die Grundkörperoberkante.

Am Ende des Verformungsweges liegen die beiden benachbarten Filterplatten fest aufeinander.

Durch die Verpressung des Weichgummihalbrundwulstes verformt dieser sich und füllt die rechteckförmige Ringnut im Plattengrundkörper aus. Hierdurch entsteht zum Druckraum hinter der Membran hin eine Abdichtung zwischen Membran und Plattengrundkörper.

Diese Abdichtung ist jedoch insofern begrenzt, da beim Prozeßschritt 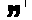 abpressen" der Preßdruck hinter der Membran (Druckkammer) dem durch die Schließkraft erzeugten Dichtdruck entgegenwirkt.

Bei Erreichen einer bestimmten Preßdruckgröße wird die Dichtwirkung aufgehoben, das heißt, die bekannte Preßmembran ist nur bis zu einem begrenzten Anpreßdruck einsetzbar.

Der Erfindung liegt die Aufgabe zugrunde, eine Preßmembran für eine Plattenfilterpresse so weiter zu entwickeln, daß sich diese einfach und kostengünstig herstellen läßt und dennoch auch sehr hohen Anforderungen an die Abdichtfunktion gerecht wird, um hohe Nachpreßdrücke zu ermöglichen.

Ausgehend von einer Preßmembran der eingangs beschriebenen Art wird diese Aufgabe erfindungsgemäß dadurch gelöst, daß das Preßteil und der Halterahmen einstückig hergestellt sind und aus demselben Material bestehen.

Überraschenderweise hat sich herausgestellt, daß auch bei einem Verzicht auf die komplizierte Kombination von Halterahmen und Preßteil bei entsprechender Abstimmung der Dichtkräfte eine sehr zuverlässige Abdichtung der Preßmembran erzielbar ist. Dabei zeichnet sich die einstückige und aus demselben Material bestehende erfindungsgemäße Konstruktion der Preßmembran dadurch aus, daß sie sich sehr einfach und kostengünstig herstellen läßt. Als Material für die erfindungsgemäße Preßmembran kommt dabei sowohl Gummi als auch Kunststoff in Frage, wobei die Härte des Materials nur unwesentlich über der Härte des gemäß dem Stand der Technik ausschließlich für das Preßteil verwendeten Materials liegt. In Versuchen konnte nachgewiesen werden, daß sich mit der Preßmembran gemäß der Erfindung Nachpreßdrücke von > 16 bar realisieren lassen, ohne daß irgendwelche Undichtigkeiten auftreten.

Eine Ausgestaltung der erfindungsgemäßen Preßmembran besteht darin, daß der Randwulst mit einer seitlich offenen, umlaufenden und mit einem Raum für das Druckmittel in Verbindung stehenden Dichtnut versehen ist.

Durch diese Ausgestaltung kann ein selbstverstärkender Dichtungseffekt erzielt werden, da das Druckmittel in die Dichtnut eindringen kann und mit ansteigendem Druck zu einer zunehmenden Aufweitung der Dichtnut führt. Diese Aufweitung geht mit einer zunehmend stärkerwerdenden Anpressung des Randwulstes in die daran angepaßte Ringnut einher, so daß die Dichtkräfte beim Nachpressen mit zunehmendem Druck ansteigen. Aufgrund der vorbeschriebenen Maßnahme läßt sich somit auf sehr vorteilhafte Weise eine weitere Steigerung der Dichtwirkung erzielen.

Die Erfindung weiter ausgestaltend wird vorgeschlagen, daß die Dichtnut durch ein Kopfteil des Randwulstes und eine damit verbundene Dichtlippe gebildet ist, deren Querschnittsmittelachse in einem spitzen Winkel zur Querschnittsmittelachse der Dichtnut verläuft.

Die Dichtlippe hat den Vorteil, daß sich diese aufgrund ihrer verhältnismäßig geringen Stärke auch bei geringen Druckdifferenzen verhältnismäßig leicht verformen bzw. verlagern läßt. Auch bei zu Beginn der Druckerhöhung noch bestehenden Undichtigkeiten werden diese alsbald unterbunden, da selbst infolge kleinster Druckgefälle eine selbsttätige Anlage der Dichtlippe an den Grund der Ringnut stattfindet. Dieser Effekt wird noch zusätzlich dadurch unterstützt, daß die Querschnittsmittelachse der Dichtlippe in einem spitzen Winkel zur Außenfläche des Kopfteils verläuft, wodurch in der Regel bereits eine sehr gute Anfangsabdichtung erreicht wird.

Ferner ist es besonders vorteilhaft, wenn sich die Dichtnut mindestens über die dem Preßteil der Preßmembran zugewandten Hälfte des Randwulstes erstreckt, weil mit zunehmender Dichtnuttiefe die Flexibilität der Dichtlippe gleichfalls zunimmt.

Das für die Dichtwirkung entscheidende Eindringen des Druckmittels in die Dichtnut wird gemäß einer weiteren Ausgestaltung der Erfindung dadurch gewährleistet, daß an mindestens eine Wandung der Dichtnut ein in den Nutquerschnitt vorstehender umlaufender Abstandswulst angeformt ist.

Alternativ zu dem Abstandswulst kann es vorteilhaft sein, an mindestens eine Wandung der Dichtnut eine Vielzahl von umlaufend angeordneten Abstandsnocken anzuformen.

Beide vorgenannten Maßnahmen verhindern, daß die Dichtnut durch ungünstige Umstände bei der Montage des Randwulstes in der Ringnut deshalb verschlossen und für das Druckmittel unerreichbar ist, weil die vergleichsweise labile Dichtlippe an dem zugeordneten Bereich des Kopfteils des Randwulstes anliegt.

Eine bevorzugte Weiterbildung der Erfindung besteht ferner darin, daß der Durchmesser von durch den Halterahmen verlaufenden Ab- bzw. Zulaufbohrungen für das Filtrat bzw. Waschwasser höchstens 1/4 der Dicke des Halterahmens von der Außenfläche des Kopfteils des Randwulstes bis zu einer Anlagefläche einer benachbarten Filterplatte beträgt.

Aufgrund dieser im Durchmesser vergleichsweise kleinen Ab- bzw. Zulaufbohrungen wird die Übertragung einer durch Verriegelung der Plattenfilterpresse auf den Randwulst wirkenden Dichtkraft auch bei einem vergleichsweise weichen Material der Preßmembran nicht gestört.

Um eine Verminderung der insgesamt dem Filtrat zur Verfügung stehenden Querschnittsfläche der Ab- bzw. Zulaufbohrungen zu vermeiden, wird schließlich noch vorgeschlagen, daß benachbarte Ab- bzw. Zulaufbohrungen einen Abstand voneinander aufweisen, der maximal dem 5-fachen der Dicke des Halterahmens von der Außenfläche des Kopfteils des Randwulstes bis zu einer Anlagefläche einer benachbarten Filterpresse entspricht. Vorzugsweise beträgt der Abstand der Ab- bzw. Zulaufbohrungen der Dicke des Halterahmens.

Anstelle von wenigen Ablaufbohrungen mit vergleichsweise großem Durchmesser werden somit bei der erfindungsgemäßen Preßmembran mehr Ablaufbohrungen mit einem entsprechend verminderten Durchmesser vorgesehen.

Die Erfindung wird nachfolgen anhand eines Ausführungsbeispiels, das in der Zeichnung dargestellt ist, näher erläutert. Es zeigt:
- Figur 1:: Einen Querschnitt durch eine Membranplatte einer Plattenfilterpresse mit zwei auf gegenüberliegenden Seiten der Membranplatte angeordneten Preßmembranen.
und

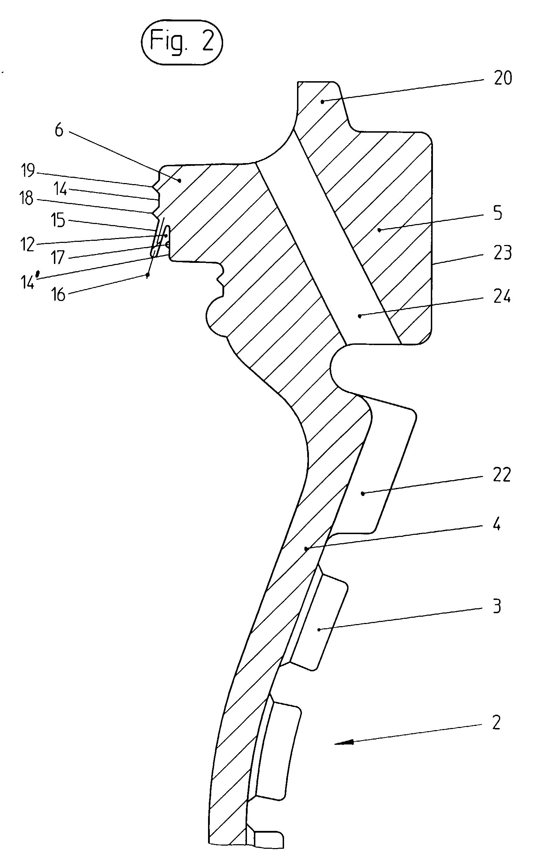

- Figur 2:: Einen vergrößerten Querschnitt durch eine Preßmembran im Bereich des Randwulstes.

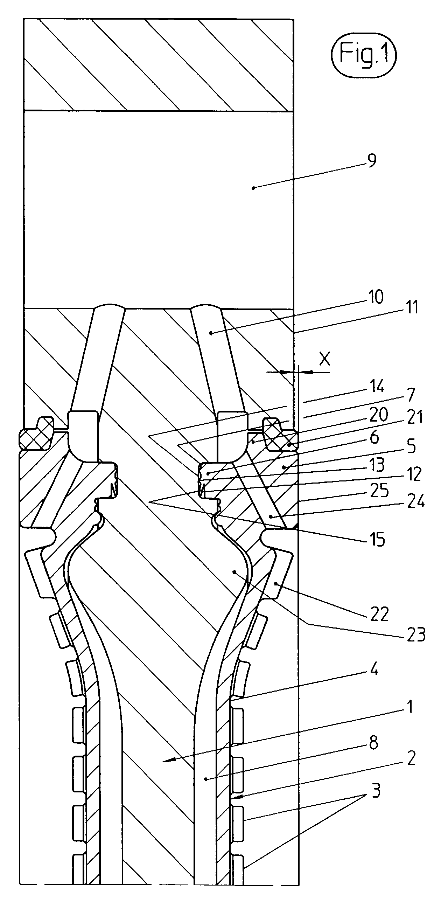

Figur 1 zeigt eine Membranplatte 1 einer Plattenfilterpresse, wie sie zur Filtration verschiedener Suspensionen verwendet werden kann. Die Plattenfilterpresse besteht aus einer Vielzahl von in Figur 1 nicht dargestellten Filterplatten, die planparallel zueinander angeordnet sind. Dabei können entweder ausschließlich die in Figur 1 dargestellten Membranplatten 1 verwendet werden oder aber es wird abwechselnd jeweils eine Membranplatte 1 und eine einfache Filterplatte nebeneinander angeordnet. Zwischen zwei benachbarten Filterplatten befindet sich jeweils eine Filterkammer, die in verriegelter Stellung des Filterplattenpakets in sich abgeschlossen ist.

Die in Figur 1 gezeigte Membranplatte 1 weist eine im wesentlichen parallel zu ihrer Oberfläche verlaufenden Preßmembran 2 auf. Die Preßmembran 2 besteht aus einem mit einer Vielzahl von Noppen 3 versehenen Preßteil 4 und einem umlaufenden Halterahmen 5, in dessen Bereich die Preßmembran 2 eine um ein mehrfaches größere Dicke aufweist als im Bereich des Preßteils 4. Im Bereich des Halterahmens 5 weist die Preßmembran 2 einen ebenfalls umlaufenden Randwulst 6 auf, der in eine daran angepaßte Ringnut 7 in der Membranplatte 1 eingreift.

Der mit den Noppen 3 versehenen Seite des Preßteils 4 ist ein in Figur 1 nicht dargestelltes Filtertuch vorgelagert, das die zum Abschluß des Filtrationsvorgangs mit einem Filterkuchen gefüllte Filterkammer begrenzt. Über nicht sichtbare Zuleitungen ist in einen zwischen der Membranplatte 1 und der Preßmembran 2 befindlichen Raum 8 ein Druckmittel einleitbar. Auf diese Weise kann großflächig Druck über das Filtertuch auf den Filterkuchen ausgeübt werden, um somit eine weitere Ausscheidung von Flüssigkeit aus dem Filterkuchen zu erzielen.

Die Abdichtung des unter Druck stehenden Raumes 8, von Kanalbohrungen 9 sowie darin mündenden Zuleitungen 10 erfolgt zum einen über eine Verpressung der Preßmembran 2 im Bereich des Halterahmens 5 und dessen Randwulstes 6. In diesem Bereich tritt eine Komprimierung der Preßmembran 2 ein, wenn das Filterplattenpaket der Plattenfilterpresse im Betrieb verriegelt ist und die in Figur 1 nicht sichtbare benachbarte Filterplatte unmittelbar an einer Seitenfläche 11 der Membranplatte 1 zur Anlage kommt. In dieser Anlageposition sind der Halterahmen 5 und dessen Randwulst 6 um ein Längenmaß x zusammengepreßt, um das der Halterahmen im entspannten Zustand über die Seitenfläche 11 der Membranplatte 1 vorsteht.

Der Dichteffekt der Preßmembran wird zum anderen dadurch erzielt, daß der Randwulst 6 mit einer seitlich offenen, umlaufenden und mit dem Raum 8 für das Druckmittel in Verbindung stehenden Dichtnut 12 versehen ist. In diese Dichtnut 12 dringt das Druckmittel ein und führt somit zu einer Aufweitung der Dichtnut 12, was wiederum zu einer verstärkten Anlage des Randwulstes 6 auf dem Grund 13 der Ringnut 7 führt. Mit steigendem Druck wird somit eine zunehmend verbesserte Abdichtung erzielt.

Das Preßteil 4 und der Halterahmen 5 der Preßmembran 2 sind einstückig hergestellt und bestehen aus demselben Gummimaterial. Dieses Gummimaterial weist eine im Vergleich zu Preßmembranen nach dem Stand der Technik nur geringfügig größere Shore-Härte auf. Die Preßmembran 2 weist im Bereich des Halterahmens 5 einen umlaufenden Randwulst 6 auf, in dessen Kopfteil 14 eine Dichtlippe 15 ausgebildet ist. Die Dichtnut 12 wird somit einerseits durch eine Fläche 14' des Kopfteils 14 des Randwulstes 6 und andererseits durch eine Seitenfläche der Dichtlippe 15 begrenzt. Eine Querschnittsmittelachse 16 der Dichtlippe 15 verläuft in einem spitzen Winkel zur Querschnittsmittelachse der Dichtnut 12 und somit im nichtmontierten Zustand der Preßmembran 2 auch in einem spitzen Winkel zu dem Grund 13 der Ringnut 7. Es ist somit stets eine sichere Anlage der äußeren Seitenfläche der Dichtlippe 15 am Grund 13 der Ringnut 7 gewährleistet.

An den in der Dichtnut 12 liegenden Bereich der Fläche des Kopfteils 14 ist eine Vielzahl von umlaufend und im Abstand zueinander angeordneten Abstandsnocken 17 angeformt, die verhindern, daß die Dichtlippe 15 nach der Montage des Randwulstes 6 in der Ringnut 7 unmittelbar am Kopfteil 14 anliegt. Eine solche direkte Anlage der Dichtlippe 15 wäre von Nachteil, weil dadurch verhindert werden könnte, daß Druckmedium in die Nut 12 eindringt.

Am Übergang der Dichtlippe 15 in das Kopfteil 14 sowie im Bereich der freien oberen Hälfte des Kopfteils 14 des Randwulstes 6 sind zwei im Querschnitt dreieckige umlaufende Dichtstreifen 18 und 19 angeformt, die die Dichtfunktion der Preßmembran 2, insbesondere in der Anfangsphase des sich selbsttätig verstärkenden Abdichtvorgangs, weiter verbessern.

Der Halterahmen 5 ist an seiner Oberseite des weiteren mit einem Stützprofil 20 versehen, das an einem in einer umlaufenden Nut gelagerten Stützkörper 21 zur Anlage kommt. Auf diese Weise wird die Beweglichkeit der Preßmembran 2 in einer Richtung senkrecht zum Preßteil 4 begrenzt.

Schließlich ist die Preßmembran 2 in einem Übergangsbereich 21 des Preßteils 4 in den Halterahmen 5 noch mit speziell ausgebildeten Stütznoppen 22 versehen, die vor den übrigen Noppen 3 zur Anlage an das Filtertuch kommen und somit eine übermäßige Spannung in der Preßmembran 2 im Bereich einer in der Membranplatte 1 ausgebildeten Auswölbung 23 (siehe Figur 1) verhindern.

Ablaufbohrungen 24 bilden eine Verbindung zwischen dem vor den Stütznoppen 22 befindlichen Raum und den Zuleitungen 10 zu den Kanalbohrungen 9. Durch diese Ablaufbohrungen 24, die sich in den Eckbereichen oder in regelmäßigen Abständen über den gesamten Umfang des Halterahmens 5 verteilen, wird eine effektive Entwässerung auch der Randbereiche des Filterkuchens ermöglicht.

Der Durchmesser der Ablaufbohrungen 24 beträgt etwa 1/4 der Dicke des Halterahmens 5, gemessen von der Außenfläche des Kopfteils 14 des Randwulstes 6 bis zu einer Anlagefläche 25 einer benachbarten Filterplatte. Dadurch, daß der Durchmesser der Ablaufbohrungen 24 vergleichsweise klein gehalten wird, bleibt eine homogene Übertragung der Dichtkräfte im Bereich des Halterahmens 5 und des Randwulstes 6 gewährleistet.

## Patentansprüche

1. Preßmembran für eine Membranplatte einer Plattenfilterpresse mit einem mit Noppen versehenen Preßteil, das einem im wesentlichen parallel zu der Preßmembran verlaufenden Filtertuch zugewandt und gegen dieses preßbar ist und dazu auf seiner den Noppen gegenüberliegenden Seite mit einem Druckmittel beaufschlagbar ist sowie mit einem umlaufenden Halterahmen, über den die Preßmembran beim Verriegeln der Plattenfilterpresse mit einem an den Halterahmen angeordneten umlaufenden Randwulst in eine daran angepaßte Ringnut in der Membranplatte preßbar ist, dadurch gekennzeichnet, daß das Preßteil (4) und der Halterahmen (5) einstückig hergestellt sind und aus demselben Material bestehen.

2. Preßmembran nach Anspruch 1 dadurch gekennzeichnet, daß der Randwulst (6) mit einer seitlich offenen, umlaufenden und mit einem Raum (8) für das Druckmittel in Verbindung stehenden Dichtnut (12) versehen ist.

3. Preßmembran nach Anspruch 2 dadurch gekennzeichnet, daß die Dichtnut (12) durch ein Kopfteil (14) des Randwulstes (6) und eine damit verbundene Dichtlippe (15) gebildet ist, deren Querschnittsmittelachse (16) in einem spitzen Winkel zur Querschnittsmittelachse der Dichtnut (12) verläuft.

4. Preßmembran nach Anspruch 3 dadurch gekennzeichnet, daß die Dichtnut (12) sich mindestens über die das Preßteil (4) der Preßmembran (2) zugewandten Hälfte des Randwulstes (6) erstreckt.

5. Preßmembran nach einem der Ansprüche 2 bis 4 dadurch gekennzeichnet, daß an mindestens einer Wandung der Dichtnut (12) ein in den Nutquerschnitt vorstehender umlaufender Abstandswulst angeformt ist.

6. Preßmembran nach einem der Ansprüche 2 bis 4 dadurch gekennzeichnet, daß an mindestens einer Wandung der Dichtnut (12) eine Vielzahl von umlaufend angeordneten Abstandsnocken (17) angeformt ist.

7. Preßmembran nach einem der Ansprüche 1 bis 6 dadurch gekennzeichnet, daß der Durchmesser von durch den Halterahmen (5) verlaufenden Ab- bzw. Zulaufbohrungen (24) für das Filtrat bzw. Waschwasser höchstens 1/4 der Dicke des Halterahmens (5) von der Außenfläche des Kopfteils (14) des Randwulstes (6) bis zu einer Anlagefläche (25) einer benachbarten beträgt.

8. Preßmembran nach einem der Ansprüche 1 bis 7 dadurch gekennzeichnet, daß benachbarte Ab- bzw. Zulaufbohrungen (24) einen Abstand voneinander aufweisen, der maximal dem 5-fachen der Dicke des Halterahmens (5) von der Außenfläche des Kopfstücks (14) des Randwulstes (6) bis zu einer Anlagefläche (25) einer benachbarten Filterplatte entspricht.
